# EUROPEAN PATENT APPLICATION

(11) **EP 2 865 257 A1**
(43) Date of publication of application: **29.04.2015**
(21) Application number: 14186107.0
(22) Date of filing: 24.09.2014
(51) Int. Cl.: A01D 41/14

(54) **Height sensor for harvesting head**

(30) Priority: 22.10.2013 US 201314060230
(71) Applicant: Deere & Company, Moline, IL 61265 (US)
(72) Inventor: Pierson, Joshua, Davenport, IA Iowa 52807 (US); Potluri, Krishna S, East Moline, IL Illinois 61244 (US)
(74) Representative: Holst, Sönke

(57) **Abstract**

A height sensor (100) for an agricultural harvesting head comprises a sensor element (104); and a sensor arm (110), the sensor arm comprising a plurality of shaft elements (118, 120, 122), and each of the plurality of shaft elements (118, 120, 122) is pivotally coupled to an adjacent one of the shaft elements (118, 120, 122), and wherein the plurality of shaft elements (118, 120, 122) is held in a predefined operating position by a cable (312), and further wherein the cable (312) extends through the plurality of shaft elements (118).

## Description

This invention relates to harvesting heads for agricultural harvesters. In particular, it relates to height sensors for agricultural harvesting heads.

Harvesting heads for agricultural harvesters are typically carried over the ground at a predetermined height. In order to control the height at which the harvesting head travels sensors are often provided to sense the distance between the harvesting head of the ground.

In one arrangement, a rigid arm is provided that drags along the ground. In this arrangement, the rigid arm is connected to a rotary sensor element at its upper end and drags along the ground at its lower end. As the ground engaging end of the rigid arm is pushed upward by the ground, the upper end of the rigid arm rotates the rotary sensor.

One problem with this arrangement occurs when the agricultural harvesting head reverses direction. When this happens, the ground engaging end of the rigid arm embeds in the ground, is pulled forward at its lower end and breaks or damages the sensor element and/or rigid arm.

In another arrangement, shown in US 6202395 B1, the problem of damage is reduced somewhat by replacing a section of the rigid sensor arm with a coil spring. This makes the arm flexible and thus it can be reversed. However, the exposed spring coils of the sensor arm gather contaminants such as dirt, leaves, twigs and other small particles that wedge the coils apart. Depending upon where these contaminants are wedged they can give the arm itself a permanent set or "bend" in the middle. This bend in the middle of the sensor arm causes the sensor arm to indicate the wrong height. Furthermore, the amount of force required to flex the sensor arm cannot be varied in place. It is a function of the spring constant of the coil spring portion of the sensor arm. The only way the spring force can be varied in this arrangement is by removing and replacing the entire sensor arm. Furthermore, the amount of force required to flex the sensor arm is the same whether the arm is flexed backward, forward, to the left or to the right. It would be beneficial to provide an arm that was relatively rigid and inflexible in a lateral direction, yet has a lower end that could flex forward easily when the vehicle was reversed in direction and the sensor arm was in danger of being broken or damaged. The arrangement of US 6202395 B1 does not provide for different flexibilities of the sensor arm based on the direction in which the sensor arm is flexed (i.e. rearward, forward, or side-to-side).

In another arrangement, shown in CA 2511418 A1, the coil spring of the previous example is eliminated by providing an elongate sensor arm made of a plastic composite. This solves the problems of contaminants becoming wedged between the coils of the coil spring section, but also provides a sensor arm that is more susceptible to damage. In the arrangement of CA2511418 A1, the sensor arm is made very elongate, and the distal end (i.e. the ground engaging end) must be chained or cabled to the chassis of the agricultural harvesting head to prevent the sensor arm from flexing forward. Due to the great length of the sensor arm, the point at which it contacts the ground is considerably behind the sensor element itself, and thus it may not sense a precipitous change in the height of the agricultural harvesting head until the forward portions of the agricultural harvesting head have already collided with the ground.

In another arrangement, a spring-loaded reversing joint is provided at the upper end of the arm where it attaches to the sensing element. This arrangement permits the arm to be pushed forward at its lower end by flexure/pivoting at the reversing joint. This arrangement provides only a single point/joint at which the arm can flex forward, while the rest of the arm remains straight and rigid. Unless sufficient clearance is provided around the sensor arm, the sensor arm can reverse, but cannot flex forward and fold flat enough to completely avoid damaging the sensor arm and/or the sensing element, particularly when the harvesting head is disposed close to the ground.

What is needed, therefore, is a height sensor for an agricultural harvesting head that reduces or eliminates some or all of the problems exhibited by these prior art devices.

It is an object of this invention to provide such a height sensor.

This object is achieved by the independent claim. The dependent claims recite features of advantageous embodiments of the invention.

A height sensor for an agricultural harvesting head that harvests agricultural crops while traveling in a harvesting direction is provided, the height sensor comprising: a sensor element; a sensor arm, the sensor arm comprising a plurality of shaft elements, wherein each of the plurality of shaft elements is pivotally coupled to an adjacent one of the shaft elements, and wherein the plurality of shaft elements are held in a predefined operating position by a cable, and further wherein the cable extends through the plurality of shaft elements.

Each of the plurality of shaft elements may define a passageway extending therethrough, and through which the cable extends. The cable may be anchored at one end to a lower one of the plurality of shaft elements, is slidingly supported in and extends through a second plurality of the plurality of shaft elements. A coil spring may be disposed at an upper end of the sensor arm. The cable may have an upper end, and the upper end of the cable (may be coupled to the coil spring. The cable may be preloaded to hold the sensor arm into a fixed operating shape. The height sensor may further comprise a plurality of pivot pins, wherein each of the plurality of pivot pins pivotally couples said each of the plurality of shaft elements to said an adjacent one of the plurality of shaft elements. Each of the plurality of pivot pins may extend perpendicular to the harvesting direction. Each of the plurality of pivot pins may extend in a direction parallel to others of the plurality of pivot pins. Each of the plurality of shaft elements may be identically constructed to others of the plurality of shaft elements. An upper end of each of the plurality of shaft elements may be received into a lower end of each of said plurality of shaft elements. The lower end of each of the plurality of shaft elements may be shingled over the upper end of another of each of said plurality of shaft elements.

An embodiment of the invention is shown in the drawings, in which:
Figure 1 is a side view of a height sensor in accordance with the present invention.
Figure 2 is a perspective review of the height sensor of Figure 1.
Figure 3 is a cross-sectional view through the length of the height sensor of Figures 1-2 taken at section line 3-3 in Figure 2.
Figures 4A, 4B, 4C and 4D are left side, lower end, upper end, and bottom side views of one of the segments of the sensing arm of the height sensor of Figures 1-3.

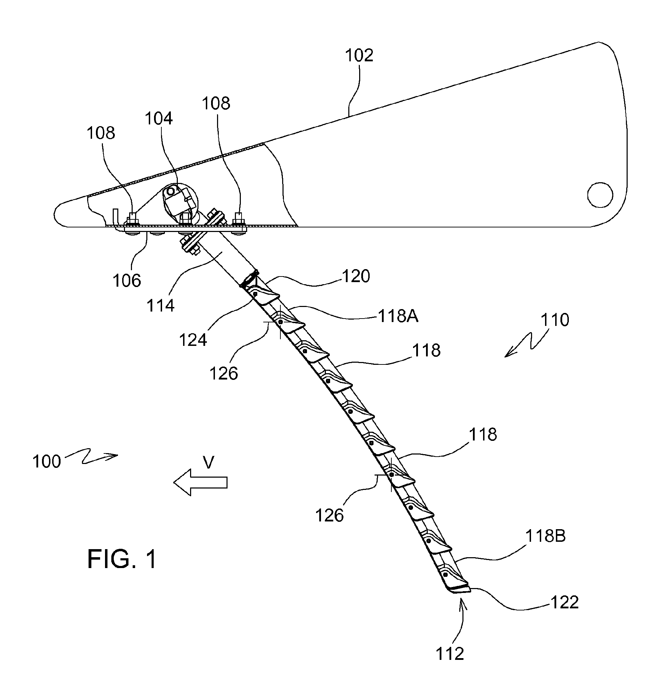

Referring to Figures 1-2, a height sensor 100 is shown mounted to a support structure 102. The support structure 102 and the height sensor 100 travel through an agricultural field in a direction "V". The direction "V" is the harvesting direction: the direction the height sensor 100 on the support structure 102 travel when the crop is being harvested by the agricultural harvesting head on which the support structure 102 and the height sensor 100 are mounted.

The support structure 102 forms a portion of the frame, or is mounted to the frame of an agricultural harvesting head. In this case, the support structure 102 may be employed as a forwardly extending arm for supporting a reciprocating knife at a leading edge of a platform. It may also be employed as a floating arm for supporting a conveyor roller or conveyor belt of a mowing platform also known as a "draper platform" or "draper head". Alternatively it may be employed as a row crop separator disposed at either end or in a central region of a row crop harvesting head. Alternatively it may be employed as a crop divider disposed at either end of the mowing platform.

The height sensor 100 comprises a sensor element 104 that is mounted on a plate 106. The plate is fixed to the support structure 102 with a plurality of fasteners 108.

The height sensor 100 further comprises sensor arm 110. The sensor arm 110 is coupled at its upper end to the sensor element 104. The sensor arm 110 extends generally downward and rearward. The sensor arm 110 has a lower end 112 that is configured to engage and drag along the surface of the ground.

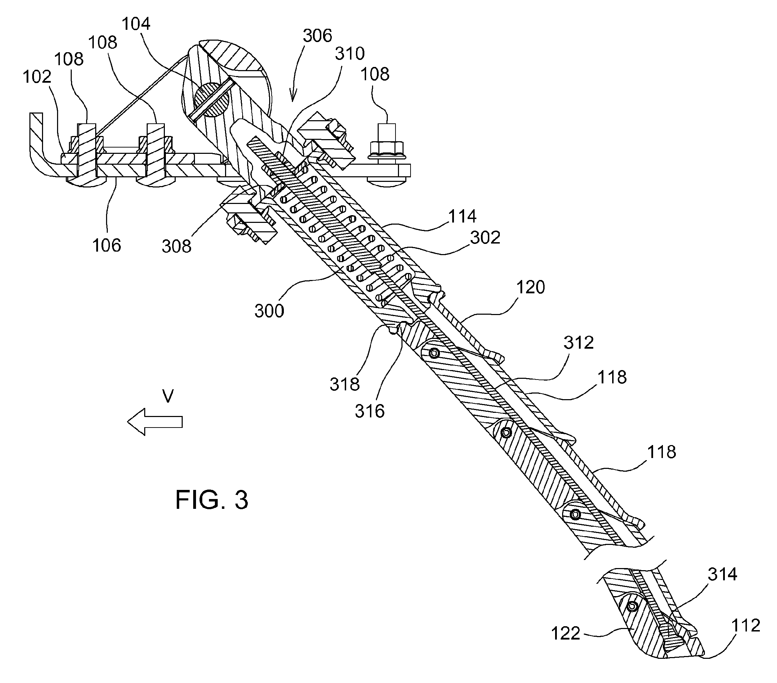

The sensor arm 110 comprises an upper portion 114 that encloses a spring (see Figure 3). The upper portion 114 is fixed at its upper end to the sensor element 104.

The sensor arm 110 further comprises a lower portion 116 that further comprises a plurality (nine in the Figures) of shaft elements 118, an upper terminating shaft element 120, and a lower terminating shaft element 122. The sensor arm 110 is in the form of an elongate shaft. Each of the individual shaft elements 118, 120, 122 comprise shorter segments of the elongate shaft. The individual shaft elements 118, 120, 122 are coupled together in series in an end-to-end arrangement to form the sensor arm 110, in the same manner that individual links in a drive chain are coupled together.

Each of the plurality of shaft elements 118 comprises an upper end that is coupled to a lower end of a first adjacent one of the plurality of shaft elements 118.

Each of the plurality of shaft elements 118 comprises a lower end that is coupled to a second adjacent one of the plurality of shaft elements 118.

All the shaft elements 118 are identical to each other in configuration, and thus the discussion below regarding each of the plurality of shaft elements 118 is equally true for all of the plurality of shaft elements 118.

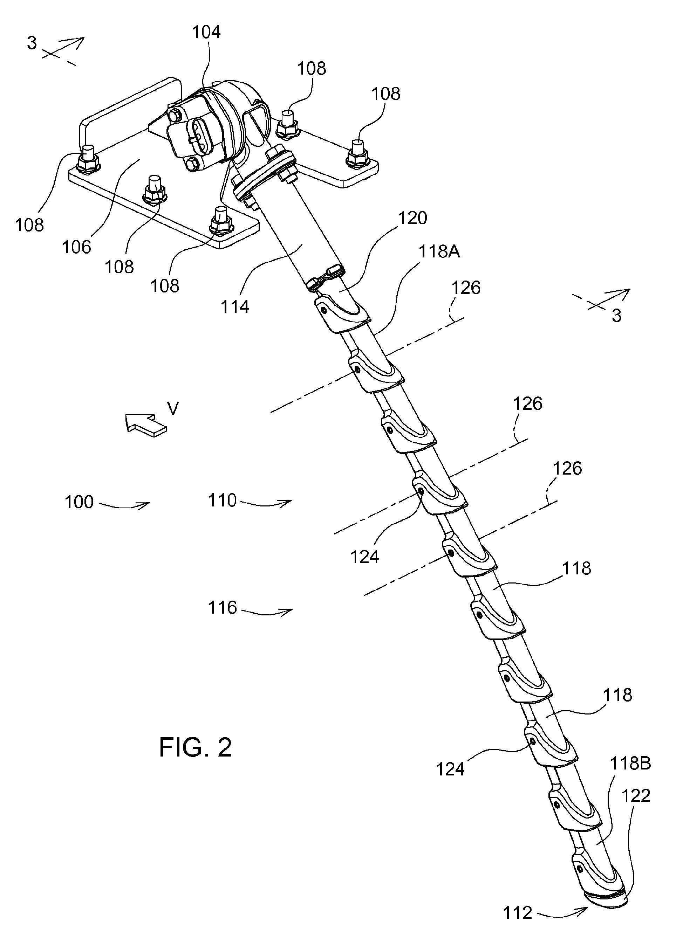

Each of the plurality of shaft elements 118 is pivotally coupled to its adjacent ones of the plurality of shaft elements 118 by pivot pins 124. These pivot pins 124 define a pivot axis 126 (see Figure 2) at the upper end of each one of the plurality of shaft elements 118 that is parallel to a pivot axis 126 at the lower end of each one of the plurality of shaft elements 118. In this manner, all of the pivot axes126 defined by the pivot pins 124 are parallel to each other and are spaced apart along the length of the lower portion 116. All of the pivot axes 126 extend horizontally and generally laterally with respect to the direction of travel "V" of the support structure 102 and the agricultural harvesting head.

An upper terminating shaft element 120 has a lower end that is configured to engage the upper end of the uppermost one of the plurality of shaft elements 118. The upper terminating shaft element 120 has an upper end that is configured to engage the lower end of the upper portion 114.

A lower terminating shaft element 122 has an upper end that is configured to engage the upper end of the lowermost one of the plurality of shaft elements 118. The lower terminating shaft element 122 has a lower end that is configured to engage and drag along the ground. The lower end of the lower terminating shaft element 122 forms the lower end 112 of the sensor arm 110.

Referring to Figure 3, the upper portion 114 of the sensor arm 110 is in the form of a tube that is hollow and defines a cavity 300. The cavity 300 defines a right circular cylinder. The cavity 300 encloses a coil spring 302. The lower end of the coil spring 302 abuts the bottom 304 of the upper portion 114 and the cavity 300. The upper end of the coil spring 302 abuts a spring retainer 306.

The spring retainer 306 comprises a washer 308 with an aperture passing therethrough. The washer 308 is sized to permit it to slide up and down inside the cavity 300. The spring retainer 306 further comprises a threaded fastener 310 that abuts the washer 308. A cable 312 that is elongate and flexible is threadedly engaged to the threaded fastener 310 at the upper end of the cable 312.

The cable 312 extends downward through the coils of the coil spring 302 and exits the cavity 300 through an aperture in the bottom of the upper portion 114.

The cable 312 extends through hollow central regions of the upper terminating shaft element 120, through hollow central regions of the plurality of shaft elements 118, and through a hollow central region of the lower terminating shaft element 122. The cable 312 has a ferrule 314 at its lower end that abuts and is retained in the lower terminating shaft element 122.

In this manner, the coil spring 302 can be placed in tension. The cable 312 spring loads the shaft elements 118, 120, 122. The tension applied to the cable 312 by the coil spring 302 pulls together the upper terminating shaft element 120, the plurality of shaft elements 118 and the lower terminating shaft element 122. This tension pulls the shaft elements together and forces them to assume the normal operating shape shown in Figures 1-3.

As will be explained below in more detail, the individual elements can flex forward with respect to each other, particularly when the agricultural harvesting head is moved in reverse (i.e. opposite the direction of travel "V") with a lower end 112 dragging on the ground but when the sensor arm 110 is released, the coil spring and cable arrangement automatically returns them to the shape shown in Figures 1-3.

The upper end of the upper terminating shaft element 120 describes a ring-shaped guide 316 that is received in a corresponding ring-shaped recess 318 in the lower end of the upper portion 114. The ring-shaped guide 316 and the ring-shaped recess 318 are so dimensioned that the upper terminating shaft element 120 can rotate with respect to the upper portion 114. It rotates about an axis that is generally parallel to the longitudinal extent of the cable 312. Since the upper terminating shaft element 120, the plurality of shaft elements 118 and the lower terminating shaft element 122 are pivotally coupled to each other with the pivot pins 124, this guide and recess arrangement permits the lower portion 116 of the sensor arm 110 to pivot as one with respect to the upper portion 114.

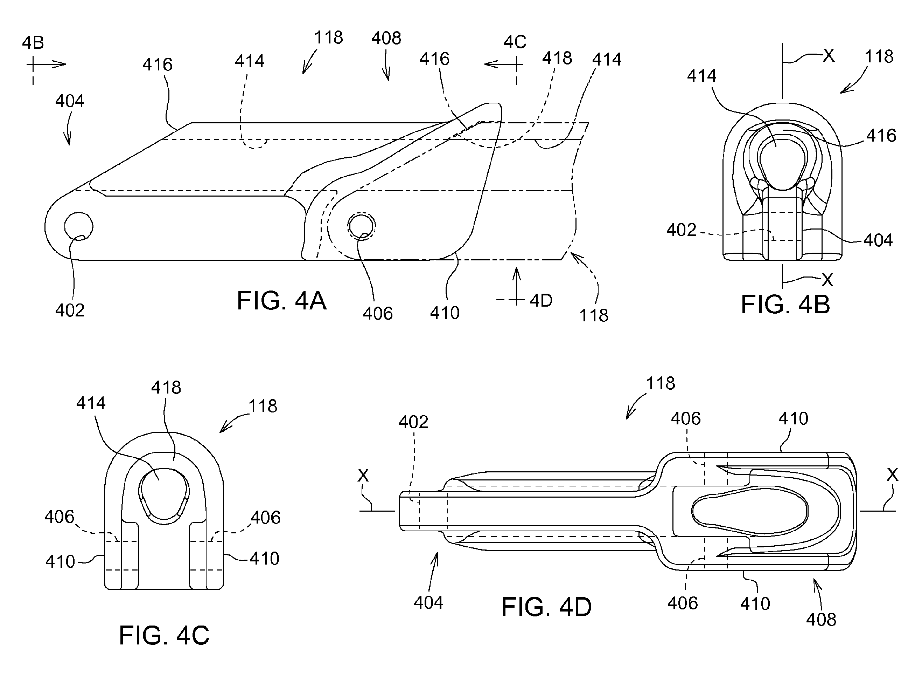

Figures 4A-4D shows details of each individual shaft element 118 of the plurality of shaft elements 118. Each shaft element 118 is symmetric about a plane "X" (Figures 4B, 4D) that extends vertically and in the fore and aft direction of travel "V".

A first aperture 402 and an abutment 416 are disposed at the upper end of the shaft element 118. The first aperture 402 extends through the upper body portion 404 of the shaft element 118 in a direction perpendicular to the longitudinal extent of the shaft element 118 and perpendicular to the longitudinal extent of the cable 312.

Similarly, two apertures 406 and are disposed on opposing lateral sides of the shaft element 118 at the lower end 408 of the shaft element 118. The two apertures 406 are formed in two flanges 410 disposed on opposite sides of the lower end 408 of the shaft element 118. A mating abutment 418 is also disposed at the lower end 408 of the shaft element 118.

The upper body portion 404 is dimensioned such that it is received into a gap between the two flanges 410. In this position, the first aperture 402 and the two apertures 406 are aligned (as best shown in Figure 4A) in such a manner that one of the pivot pins 124 can be inserted through the first aperture 402 and the two apertures 406 and permit the two adjacent shaft elements 118 that are thereby pinned together to pivot with respect to each other about the pivot axis 126 defined by the pivot pin 124.

The lower end of the upper terminating shaft element 120 is configured identical to the lower end of the uppermost shaft element 118A. It is similarly coupled to the uppermost shaft element 118A with a pivot pin 124 and similarly pivots with respect to the uppermost shaft element 118A about the pivot axis 126 defined by the pivot pin 124.

The upper end of the lower terminating shaft element 122 is configured identical to the upper end of the lowermost shaft element 118B. It is similarly coupled to the lowermost shaft element 118B with the pivot pin 124 and similarly pivots with respect to the lowermost shaft element 118B about the pivot axis 126 defined by the pivot pin 124.

The first aperture 402 and the two apertures 406 are disposed on the front side of the shaft element 118. The body of the shaft element 118 defines a passageway 414 that is elongate and 414 that passes through the body of the shaft element 118. Each passageway 414 is disposed such that it is aligned with a similar passageway 414 in the adjacent shaft elements 118 to which the shaft element 118 is pinned. In this manner, the passageway 414 in each of the shaft elements 118 forms a long, continuous passageway that extends substantially the entire length of the lower portion 116 of the sensor arm 110. It is this passageway through which the cable 312 passes.

When the cable 312 is tensioned (by appropriately tightening or loosening the threaded fastener 310 on the upper end of the cable 312), it pulls the upper terminating shaft element 120, the plurality of shaft elements 118, and the lower terminating shaft element 122 together. It mechanically engages the upper terminating shaft element 120 and the lower terminating shaft element 122. All the shaft elements 118 that are disposed between the upper terminating shaft element 120 and the lower terminating shaft element 122 are not tensioned directly by the cable 312. The cable 312 passes freely through the shaft elements 118 and can slide with respect to shaft elements 118 as the lower portion 116 of the sensor arm 110 flexes forward from the position illustrated herein and backward again. The sliding ability of the cable 312 with respect to the individual shaft elements 118 permits the lower portion to flex that whatever pivot joint defined by pivot pins 124 best reduces the pressure applied by the ground to the lower end 112 of the sensor arm 110, and thereby minimizes the potential for injury to the sensor arm 110.

Further, this arrangement evenly distributes the abutting force between an abutment 416 and a mating abutment 418 (see Figure 4). Even further, tensioning by a common cable eliminates the necessity of providing a separate tensioning spring at each of the pivot pins 124 to individually apply an abutting force between the abutment 416 and the mating abutment 418 (see Figure 4).

Since all of the shaft elements 118, 120, 122 are pinned together and pivot with respect to each other, this tension in the cable 312 causes all of the shaft elements 118, 120, 122 to pivot about their pivot pins 124 until an abutment 416 at the upper end of the shaft element 118 (which is disposed on the opposite side of the cable 312 from the pivot pins 124) abuts a mating abutment 418 at the lower end of the immediately adjacent shaft element 118. This abutting relationship is best shown in Figure 4A. This prevents further rotation of each shaft element 118 with respect to its adjacent shaft elements.

It is the abutting relationship that causes the lower portion 116 of the sensor arm 110 to form a rigid, predefined shape having the curvature shown in Figure 1.

While the abutting relationship prevents the shaft elements 118, 120, 122 from pivoting further to the rear with respect to each other, the shaft elements 118, 120, 122 can be pivoted forward with respect to each other (about pivot pins 124) since the cable is tensioned by the coil spring 302 and can increase in length.

In particular, the lower portion 116 can pivot forward at its lower end 112 even if the upper end of the sensor arm 110 is stationary. As it pivots forward, each of the abutments 416 will be pulled away from its mating abutment 418, and each of the shaft elements 118, 120, 122 of the lower portion 116 will pivot forward with respect to the adjacent shaft elements 118, 120, 122 to which said each of the shaft elements 118, 120, 122 is pinned. It is this flexibility that reduces likelihood of damage to the height sensor 100 when the agricultural vehicle on which the agricultural harvesting head is supported travels in reverse (i.e. in a direction opposite to the direction "V" of travel during harvesting).

During normal harvesting operations, when the sensor arm 110 is being dragged along the ground traveling in the direction "V", the lower portion 116 will hold its shape as shown in Figure 1 even as the entire arm pivots up and down with respect to the ground rotating the sensor element 104. This motion causes the sensor element 104 to rotate and to indicate the rising and falling of the ground underneath the support structure 102 (and hence the rising and falling of the agricultural harvesting head).

On occasion, however, the direction of the agricultural harvesting head is reversed and the agricultural harvesting head travels in a direction opposite the direction "V". This will happen, for example, when the operator of the vehicle that carries the agricultural harvesting head reverses its direction of travel and backs the vehicle up.

When this reversal occurs, the ground upon which the lower end 112 rests will pull the lower end 112 forward, pivoting each of the shaft elements 118, 120, 122 forward with respect to its adjacent shaft elements. The abutment 416 and the mating abutment 418 will be pulled apart, and the coil spring 302 will be compressed as the cable 312 is pulled downwards into the lower portion 116. Rather than becoming embedded in the ground and breaking off or otherwise being damaged, the sensor arm 110 will survive the reversal undamaged.

The configuration of each of the shaft elements 118, 120, 122 further protects the sensor arm 110 by limiting the ability of dirt, sticks, twigs, or other particulate matter from entering the gap formed between the abutment 416 and the mating abutment 418. In particular, the abutment 416 and the mating abutment 418 are shingled. An overlapping cover 420 extends outward from the abutment 416 and extends over the top of the mating abutment 418. This cover deflects dirt and other contaminants away from between the abutment 416 and the mating abutment 418. Furthermore, the two flanges 410 are disposed the lower end of each shaft element 118 and extend downward therefrom. The two flanges 410 extend downward and cover the lateral sides of the upper body portion 404 of the shaft element 118 that is pinned to the two flanges 410. In this manner, contaminants falling on the shaft element 118 are deflected away from the inner surfaces of the two flanges 410 that abut the upper body portion 404, which pivot with respect to each other and rub against each other. In effect, this shingles the lateral sides of the sensor arm 110 at each of the joints between adjacent shaft elements 118.

Furthermore, by disposing the first aperture 402 and the two apertures 406 on the leading edge (i.e. the forward edge) of the sensor arm, there is no gap along the leading edge into which dirt or other contaminants can become embedded. In this manner, the arrangement of the present invention is unlike sensor arms that include a flexible coil spring shaft portion, such as those shown in US6202395 (B1), for example. In these arrangements, the sensor arm can be flexed in all directions, pulling the adjacent coils apart and thereby permitting contaminants to be inserted between the spring coils, thereby preventing them from returning to their original (unflexed) position.

As an additional advantage, and unlike that shown in the arrangement of US6202395 (B1), the sensor arm cannot be flexed backwards and thereby give a false reading of height.

As yet another advantage, and also unlike that shown in the arrangement of US6202395 (B1), the coupling of each of the shaft elements 118, 120, 122 with a pivot pin 124 prevents the sensor arm 110 from being strangely flexed side-to-side as it travels over the ground. Again, and in comparison, the coil spring arrangement of US6202395 (B1) can be flexed from side-to-side as well as forward and backward. The coil spring of US6202395 (B1) provides equal flexure of the sensor arm in every direction under the same loads.

Of course, some reduced amount of side to side flexure of the sensor arm 110 may be beneficial, for example to translate sideways slightly to get around obstructions such as corn stobs in the field which would otherwise give a false indication of height.

This slight sideways translation of the sensor arm 110 (slight as compared to the forward flexure of the sensor arm 110, which, in the arrangement shown herein can permit the sensor arm 110 to fold in half) can be provided by slightly enlarging the first aperture 402 such that a limited degree of side-to-side flexure at each of the joints defined by the pivot pins 124 is allowed.

As yet another advantage, and also unlike that shown in the arrangement of US6202395 (B1), the total amount of forward flexure of the lower end 112 of the sensor arm 110 when traveling in the reverse direction can be modified by changing the operating length of the coil spring 302. The shorter the operating length of the coil spring 302, the shorter the distance that the shaft elements 118, 120, 122 can pivot forward (i.e. flex) with respect to their adjacent shaft elements. Further, by varying the preload on the coil spring 302 by one adjustment (i.e. tightening or loosening the threaded fastener 310) the amount of force required to flex the sensor arm 110 forward can be increased or reduced, respectively.

## Claims

1. A height sensor (100) for an agricultural harvesting head that harvests agricultural crops while traveling in a harvesting direction (V), the height sensor comprising a sensor element (104) and a sensor arm (110), the sensor arm comprising a plurality of shaft elements (118, 120, 122), wherein each of the plurality of shaft elements (118, 120, 122) is pivotally coupled to an adjacent one of the plurality of shaft elements (118, 120, 122), and wherein the plurality of shaft elements (118, 120, 122) are held in a predefined operating position by a cable (312), and further wherein the cable (312) extends through the plurality of shaft elements (118).

2. The height sensor (100) of Claim 1, wherein each of the plurality of shaft elements (118, 120) defines a passageway (414) extending therethrough, and through which the cable (312) extends.

3. The height sensor (100) of Claim 1, wherein the cable (312) is anchored at one end to a lower one of the plurality of shaft elements (122), is slidingly supported in and extends through a second plurality (118) of the plurality of shaft elements (118, 120).

4. The height sensor (100) of Claim 3, further comprising a coil spring (302) disposed at an upper end of the sensor arm (110).

5. The height sensor (100) of Claim 4, wherein the cable (312) has an upper end, and further wherein the upper end of the cable (312) is coupled to the coil spring (302).

6. The height sensor (100) of Claim 5, wherein the cable (312) is preloaded to hold the sensor arm (110) into a fixed operating shape.

7. The height sensor (100) of Claim 1, further comprising a plurality of pivot pins (124), wherein each of the plurality of pivot pins (124) pivotally couples said each of the plurality of shaft elements (118, 120, 122) to said an adjacent one of the plurality of shaft elements (118, 120, 122).

8. The height sensor (100) of Claim 7, wherein each of the plurality of pivot pins (124) extends perpendicular to the harvesting direction (V).

9. The height sensor (100) of Claim 8, wherein each of the plurality of pivot pins (124) extend in a direction parallel to others of the plurality of pivot pins (124).

10. The height sensor (100) of Claim 1, wherein each of the plurality of shaft elements (118) is identically constructed to others of the plurality of shaft elements (118).

11. The height sensor (100) of Claim 1, wherein an upper end of each of said plurality of shaft elements (118, 122) is received into a lower end of each of said plurality of shaft elements (118, 120).

12. The height sensor (100) of Claim 11, wherein the lower end of each of said plurality of shaft elements (118, 120) is shingled over the upper end of another of each of said plurality of shaft elements (118, 122).

13. A header with a height sensor (100) according to one of the preceding claims.
